# EUROPEAN PATENT SPECIFICATION

(11) **EP 2 023 266 B1**
(45) Date of publication and mention of the grant of the patent: **03.10.2012**
(21) Application number: 07015093.3
(22) Date of filing: 01.08.2007
(51) Int. Cl.: G06K 9/00, G06K 9/20, G06K 9/62

(54) **Searching media content for objects specified using identifiers**
Durchsuchen von Medieninhalt auf mit Identifikatoren spezifizierte Elemente
Recherche de contenu de média pour des objets spécifiés utilisant des identificateurs

(43) Date of publication of application: 11.02.2009
(73) Proprietor: Ricoh Company, Ltd., Tokyo 143-8555 (JP)
(72) Inventor: Erol, Berna, CA 94025-7054 (US); Hull, Jonathan J., CA 94025-7054 (US)
(74) Representative: Schwabe - Sandmair - Marx

(56) References cited:
- EP-A- 1 229 496
- WO-A-2004/072897
- WO-A-2005/043270
- US-A- 5 432 864
- DAVIS M ET AL: "Towards Context-Aware Face Recognition" ACM MULTIMEDIA, PROCEEDINGS OF THE INTERNATIONAL CONFERENCE, NEW YORK, NY, US, vol. 13, 6 November 2005 (2005-11-06), pages 483-486, XP007902961
- BOUKRAA M ET AL: "Tag-based vision: assisting 3d scene analysis with radio-frequency tags" 8 July 2002 (2002-07-08), INFORMATION FUSION, 2002. PROCEEDINGS OF THE FIFTH INTERNATIONAL CONFERENCE ON JULY 8-11, 2002, PISCATAWAY, NJ, USA,IEEE, PAGE(S) 412-418 , XP010595150 ISBN: 0-9721844-1-4 * the whole document *

## Description

### BACKGROUND OF THE INVENTION

### 1. Field of the Invention

The present invention relates generally to processing of digital information, and more particularly to techniques for identifying one or more objects from digital media content and comparing them to one or more objects specified by a machine readable identifier.

### 2. Description of the Related Art

Techniques exist for automatically recognizing objects from a document, image, etc. However, conventional object recognition techniques are very computation and time intensive and as a result not reliable. Accordingly, improved object recognition techniques are desired.

EP-A-1 229 496 discloses to extract an image of a person from among images stored in a face-image database and to write a registered image or registered-image feature vector to a memory card.

WO 2004/072897 A discloses to compute a facial ID for use in retrieving images of a person in order to recognize the person, wherein an RFID reader may be used to extract information from the person which is then stored on a storage medium.

WO 2005/043270 A discloses a system and method for identification of a person or object present in connection with the generation of multimedia content. To this end, RFID technology is employed to provide identification information about the person or object.

Davis M et al., "Towards Context-Aware Face Recognition", ACM Muldimedia, Proceedings of the International Conference, New York, US, vol. 13, 6 November 2005, pages 483-486, discloses a method for context-aware face recognition.

Boukraa M et al., "Tag-based vision: assisting 3D scene analysis with radio-frequency tags", Information Fusion, 2002. Proceedings of the Fifth IEEEE International Conference, July 8-11, 2002, pages 412-418, discloses a method for assisting 3D-scene analysis with radio-frequency tags which comprise complementary information to identify an object prior to locating it visually.

US-A-5 432 864 discloses an apparatus and method for verifying the identity of a person by comparing that person's face with an image generated using data stored on an identification card.

Y. Mae et al. - "Object Recognition using Appearance Models Accumulated into Environment", Proc. 15-th Intl. Conf. on Pattern Recognition, 2000, vol. 4, pp. 845-848 teaches an object recognition system in which a model appearance of an object is stored in a RFID tag attached to the object. A robot recognizes the object using the accumulated models in the tag.

### SUMMARY OF THE INVENTION

Embodiments of the present invention provide techniques for identifying one or more objects from digital media content and comparing them to one or more objects specified by a machine readable identifier

In one embodiment, techniques are provided for automatically comparing one or more objects determined from digital media content (e.g., an image, audio information, video information) to one or more objects specified by a machine readable identifier to determine if an object determined from the media content matches an object specified by the machine readable identifier. One or more actions may be initiated upon determining that an object determined from the media content matches an object specified by the machine readable identifier. Information identifying the action to be initiated may also be encapsulated by the machine readable identifier.

According to an embodiment of the present invention, techniques (e.g., methods, systems, and code) are provided for processing digital media content. A first object descriptor is determined from a machine readable identifier, the first object descriptor specifying one or more features of an object. A set of one or more objects is determined from the digital media content. An object descriptor is generated for each object in the set of objects. At least one object descriptor is identified from the object descriptors determined for the set of objects that matches the first object descriptor determined from the machine readable identifier.

According to an embodiment of the present invention, an action may be performed in response to identifying the at least one object descriptor as matching the first object descriptor. In one embodiment, metadata information associated with the first object descriptor may be determined from the machine readable identifier and the action to be performed may be determined based upon the metadata information. The metadata information associated with the first object descriptor may identify the action. The action may be performed using a portion of the metadata information. The action may comprise annotating the digital media content.

In one embodiment, an identifier associated with the first object descriptor is determined from the machine readable identifier. In this embodiment, the first object descriptor determined from the machine readable identifier may specify features of a person. The set of objects determined from the digital media content may comprise one or more persons determined from the digital media content. A spatial location may be determined for a person corresponding to the at least one object descriptor. Performing the action may comprise adding, to the digital media content, information indicative of a spatial location of a person corresponding to the at least one object descriptor in the digital media content, and adding the identifier associated with the first object descriptor to the digital media content.

In one embodiment, metadata information associated with the first object descriptor is determined from the machine readable identifier. In this embodiment, the first object descriptor may specify features of a document fragment and the set of objects determined from the digital media content may comprise one or more document fragments. A spatial location in the digital media content of an object corresponding to the at least one object descriptor is determined.

The digital media content comprises an image, textual information, audio information, or video information, etc., and combinations thereof.

The first object descriptor may be determined from the machine readable by decoding the machine readable identifier. In one embodiment, the machine readable identifier may be a barcode. The barcode may be read using a barcode reader and the first object descriptor may be determined from the barcode. In another embodiment, the machine readable identifier may be stored on a radio frequency identifier (RFID) tag. An RFID reader may be used to read information from the RFID tag and the first object descriptor may be determined from the information read from the RFID tag.

In one embodiment, generating an object descriptor for an object in the set of objects comprises extracting one of more features for the object and generating an object descriptor for the object based upon the extracted one or more features. The one or more features to be extracted for an object from the digital media content may be determined based upon the one or more features specified by the first object descriptor determined from the machine readable identifier. The first object descriptor may be represented in MPEG-7 format. The first object descriptor may specify one or more features of a person, a document fragment, an image, a slide, a motion, or a speech pattern. Determining the set of objects from the digital media content comprises analyzing the digital media content for the one or more features specified by the first object descriptor.

The foregoing, together with other features, embodiments, and advantages of the present invention, will become more apparent when referring to the following specification, claims, and accompanying drawings.

### BRIEF DESCRIPTION OF THE DRAWINGS

Figs. 1A and 1B depict simplified block diagrams of a system that may be used to practice an embodiment of the present invention;
Fig. 2 is a simplified high-level flowchart depicting processing performed according to an embodiment of the present invention;
Fig. 3 depicts an example application of an embodiment of the present invention; and
Fig. 4 depicts another example application of an embodiment of the present invention.

### DETAILED DESCRIPTION OF THE PREFERRED EMBODIMENTS

In the following description, for the purposes of explanation, specific details are set forth in order to provide a thorough understanding of the invention. However, it will be apparent that the invention may be practiced without these specific details.

Embodiments of the present invention provide techniques for automatically comparing one or more objects determined from digital media content (e.g., an image, audio information, video information) to one or more objects specified by a machine readable identifier to determine if an object determined from the media content matches an object specified by the machine readable identifier. One or more actions may be initiated upon determining that an object determined from the media content matches an object specified by the machine readable identifier. Information identifying the action to be initiated may also be encapsulated by the machine readable identifier.

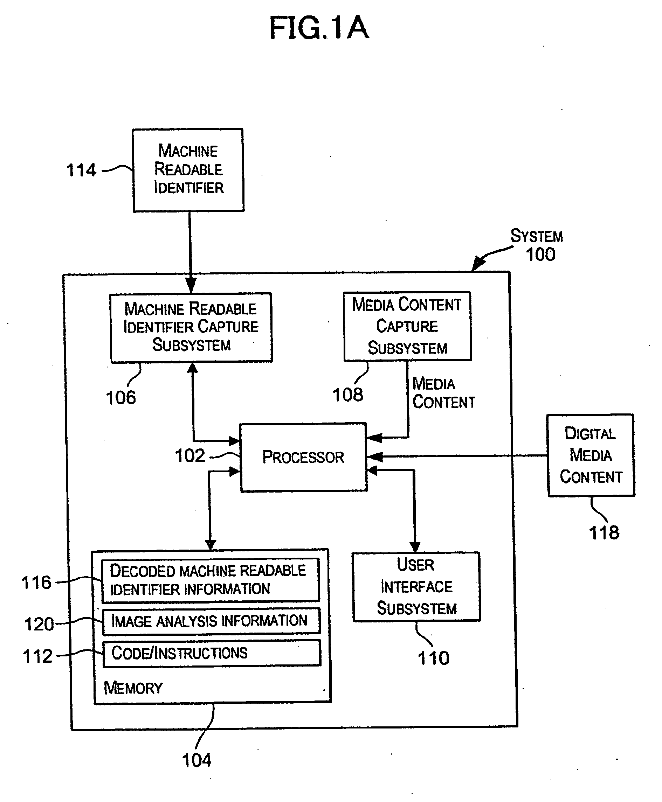

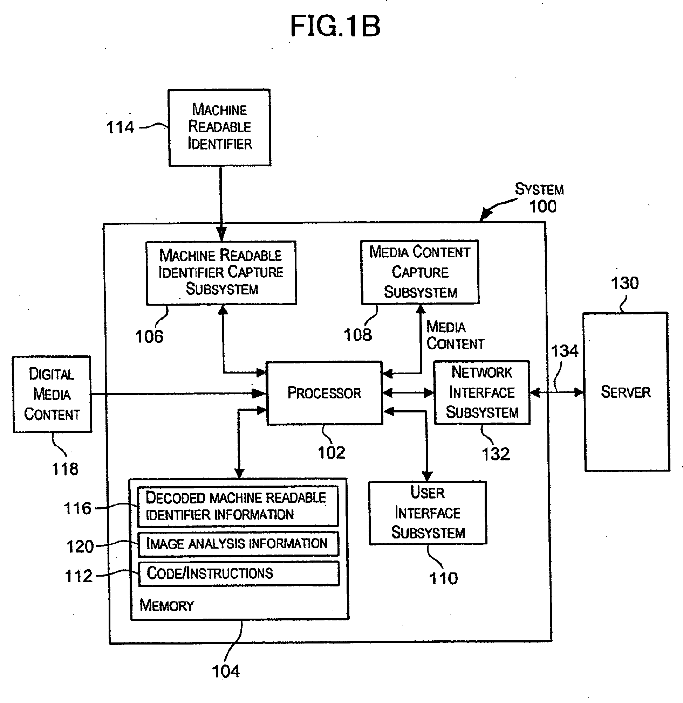

Figs. 1A and 1B depict simplified block diagrams of a system 100 that may be used to practice an embodiment of the present invention. As depicted in Fig. 1A, system 100 comprises several subsystems including a processor 102, a memory 104, a machine readable identifier capture subsystem 106, a media content capture subsystem 108, and a user interface subsystem 110. Processor 102 may communicate with the other subsystems using one or more buses. The various subsystems depicted in Fig. 1A may be implemented in software, or hardware, or combinations thereof. System 100 depicted in Fig. 1A is merely illustrative of an embodiment incorporating the present invention and does not limit the scope of the invention as recited in the claims. One of ordinary skill in the art would recognize other variations, modifications, and alternatives.

Memory subsystem 104 may be configured to store the basic programming and data constructs that provide the functionality of system 100. For example, software code modules or instructions 112 that provide the functionality of system 100 may be stored in memory 104. These software modules or instructions may be executed by processor 102. Memory 104 may also provide a repository for storing various types of data used in accordance with the present invention. Memory subsystem 104 may include a number of memories including a main random access memory (RAM) for storage of instructions and data during program execution and a read only memory (ROM) in which fixed instructions are stored. Memory subsystem 104 may also include removable media such as an optical disk, a memory card, a memory cartridge, and other storage media.

User interface subsystem 110 enables a user to interact with system 100. For example, a user may use user interface subsystem 110 to input information to system 100. The information may be input via tools such as a mouse, a pointer, a keyboard, a touchscreen, a stylus, or other like input devices. System 100 may also output information using user interface subsystem 110. Output devices may include a screen or monitor, audio information output devices, or other devices capable of outputting information.

System 100 is configured to receive one or more machine readable identifiers 114. A machine readable identifier 114 encapsulates information related to a set of one or more objects. Machine readable identifiers may be embodied in different forms such as barcodes, information stored in radio frequency identifier (RFID) tags, and the like. A machine readable identifier may be provided to system 100, for example, by a user of system 100. Alternatively, system may read a machine readable identifier using machine readable identifier capture subsystem 106. Machine readable identifier capture subsystem 106 may be configured to capture (e.g., read, detect) a machine readable identifier or access it from a memory location accessible to system 100. The components of machine readable identifier capture subsystem 106 and the functions performed by the subsystem may depend upon the types of machine readable identifiers used. For example, for capturing machine readable identifiers that are in the form of barcodes, machine readable identifier capture subsystem 106 may comprise a barcode reader for reading the barcodes. In embodiments where the machine readable identifiers information is stored in RFID tags, then machine readable identifier capture subsystem 106 may comprise a receiver for reading the machine readable identifiers information from the RFID tags.

A machine readable identifier received by system 100 may specify one or more objects. System 100 may be configured to decode the machine readable identifier to extract information encapsulated by the machine readable identifier. The extracted information may comprise information specifying one or more objects. Processing for decoding and extracting the information from a machine readable identifier may be performed by processor 102.

The decoded machine readable identifier information 116 may be stored in memory 104. According to an embodiment of the present invention, the information decoded from a machine readable identifier comprises information identifying one or more object descriptors. An object descriptor identifies an object by specifying one or more features (or characteristics) of the object. Various different types of objects may be specified, possibly for different media content types. Examples of objects include but are not limited to a document fragment (for a digital document content), an image, a slide, a person (for a photograph), a speech pattern (for audio content), a motion (for video content), etc.

The type of features specified by an object descriptor may depend on the type of object being described. In general, the features may describe aspects of the contents of the object or other characteristics of the object being specified. For example, if the object is a face of a person, then the object descriptor may describe visual appearance characteristics of the face. As another example, if the object being specified is a document fragment, then the object descriptor may specify features identifying characteristics of the document fragment such as number of n-grams (e.g., words), color distribution within the doc fragment, white space distribution within the document fragment, color histogram, or other characteristics of the document fragment. As yet another example, if the object being specified is a speech pattern (for audio content), then the object descriptor may specify pre-recorded phonemes characterizing the speech pattern. If the object is a motion object (for video content), then the object descriptor may specify a video sequence or trajectory characterizing the motion (e.g., how a person walks, sign language). Various different standards may be used to specify and process features such as ISO/IEC 15938-3, MPEG-7: Visual, 2002, ISO/IEC 15938-4, MPEG-7: Audio, 2002, ISO/IEC 15938-8, MPEG-7: Extraction and Use of MPEG-7 Description, 2002, the entire contents of which are herein incorporated by reference for all purposes.

Information 116 that is decoded from a machine readable identifier may also comprise metadata information. The metadata information may specify one or more actions to be performed for one or more object descriptors. The metadata information may also comprise information to be used in the performance of the action. The metadata may also comprise other types of information that may be used for a variety of different purposes.

In one embodiment, the metadata information may also be associated with individual object descriptors decoded from the machine readable identifier. The metadata associated with an object descriptor may include additional information associated with the object descriptor. For example, the metadata associated with an individual object descriptor may identify an action to be performed when an object descriptor matching the individual object descriptor has been identified. Examples of metadata information and the types of actions that may be performed are described below.

As previously described, the information decoded from a machine readable identifier may comprise metadata information that may identify an action to be performed for an object descriptor. Various other techniques may also be used to determine an action to be performed for an object descriptor. For example, in some embodiments, the metadata information may not indicate an action(s) but the action(s) to be performed may be inherent or automatically determined based upon the metadata information. In other embodiments, the action to be performed for an object descriptor may also be inherently determined based upon the object descriptor itself and information specified by the object descriptor. In yet other embodiments, a combination of the object descriptor and the metadata information may be used to determine an action to be performed. In yet other embodiments, the action(s) to be performed may preconfigured for different types of objects. It should be apparent that performance of an action is not necessary for the present invention as recited in the claims.

As depicted in Fig. 1A, system 100 receives digital media content 118. Digital media content 118 may be provided to system 100 or may be accessed by system 100 from a memory location accessible to system 100. Examples of digital media content include digital documents, digital photos, images, slides information, audio information, video information, or combinations thereof.

As depicted in Fig. 1A, system 100 comprises a media content capture subsystem 108 that is configured to capture digital information. For example, media content capture subsystem 108 may comprise a camera configured to capture images and photos, a scanner configured to capture scanned media content data, a microphone configured to captured audio information, a video camera configured to capture video information, and the like. The captured media content may be stored in memory 104 from where it can be accessed for subsequent processing or may be forwarded to processor 102 for further processing.

System 100 is configured to analyze the media content and determine a set of one or more objects from the digital media content. In one embodiment, information identifying the type of objects to be determined from the media content may be specified by a user of system 100. The type of objects to be determined may also be determined from the type of media content itself. For example, if the media content is a photograph of people, then system 100 may be configured to automatically extract individual people (or some other object) from the photograph. As another example, if the media content is a document, then system 100 may be configured to automatically determine document fragments (or some other objects such as images, etc.) from the document.

The type of objects to be determined from the digital media content may also be determined from the object descriptors that have been decoded from one or more machine readable identifiers. For example, if the objects descriptors specify faces of people, then faces may automatically be determined from the media content. If the object descriptors specify audio phonemes, then voice patterns may be determined from the media content. In some embodiments, the application context in which processing is performed may also be used to identify the type of objects to be determined from the media content.

Other information related to the objects determined from the media content may also be determined. For example, where appropriate, spatial information for an object determined from the media content may be determined. The spatial information for an object may identify the position of the object in the media content. For example, as previously described, if the media content is a document, then document fragments may be determined from the document and spatial coordinates of the fragments within the document may also be determined. As another example, as previously described, if the media content is a photograph, then people or their faces present in the photograph may be determined from the photograph. For each person or face, spatial information indicating the location of the person or face within the photograph may also be determined. In one embodiment, spatial information for an object may be determined at the time the object is determined from the media content. Alternatively, spatial information for an object may be determined at some later time such as when an action is to be performed for an object.

System 100 is then configured to determine object descriptors for the objects determined from the media content. As part of the processing for generating object descriptors, for each determined object, system 100 may extract features from the object and then generate an object descriptor for the object based upon the extracted features. The features to be extracted from an object may depend upon the type of the object. For example, if the object is a person's face, then facial features may be extracted from the face object and then used to generate an object description for the object.

The features to be extracted from the objects may also be guided by the features described by the object descriptors that have been decoded from a machine readable identifier. For example, assume that a set of object descriptors have been extracted from a machine readable identifier with each object descriptor identifying a document fragment. An object descriptor may identify a document fragment by specifying word lengths occurring in the document fragment. In this embodiment, for a document fragment determined from the media content, system 100 may only extract word lengths from the document fragment. In this manner, for an object determined from the media content, the number of features that are extracted from the object is reduced and limited to the features identified by the object descriptors determined from the machine readable identifier. The object descriptors determined from a machine readable identifier thus reduce the features that have to be extracted from the media content. This simplifies the feature extraction process thereby reducing the memory and computational resources required for the feature extraction. Reduction of the features search space may also increase the accuracy of the feature extraction process.

After extracting features for the objects determined from the media content, system generates an object descriptor for each object based upon the features extracted from that object. The object descriptors generated for the objects determined from the media content are then compared to the object descriptors decoded from the machine readable identifier(s) to find matching object descriptors, if any.

Different techniques may be used to compare the two sets of object descriptors to find matching object descriptors. According to one technique, for each object descriptor in the set of object descriptors generated for objects determined from the media content, a distance metric is calculated for that object descriptor and each object descriptor in the set of object descriptors decoded from a machine readable identifier, where the distance metric between two object descriptors provides a measure of the similarity or matching between the two object descriptors. For any two object descriptors, the distance metric calculated for the pair may then be compared to a preset threshold to determine if the two object descriptors are to be considered as matching. For example, in an embodiment where a lower value for the distance metric identifies a better match, two object descriptors may be considered as matching if the distance metric calculated for the pair is less than the threshold value. Accordingly, system 100 may identify two object descriptors as matching even though they are not exactly similar. A user may thus control the desired amount of similarity required for a match by setting the threshold to an appropriate value.

If an object descriptor from the set of object descriptors generated for the objects determined from the media content matches an object descriptor decoded from the machine readable identifier, it implies that an object determined from the media content and corresponding to the matching object descriptor satisfies or matches the features specified by an object descriptor decoded from the machine readable identifier. Thus, a match indicates that an object described by an object descriptor decoded from the machine readable identifier is found in the objects determined from the media content. A match indicates that an object determined from the media content has features that match features specified by an object descriptor decoded from a machine readable identifier.

Various actions may be initiated for an object descriptor in the set of object descriptors generated for the objects that is identified as matching an object descriptor decoded from the machine readable identifier. As previously described, various techniques may be used for determining the action to be performed. For example, if a specific object descriptor generated for an object determined from the media content is found to match a first object descriptor decoded from an machine readable identifier, then the action to be initiated may be specified by metadata associated with the first object descriptor. Alternatively, the action to be performed may be inherent or automatically determined from the contents of the metadata information associated with the first object descriptor. The action to be initiated may also be determined from the nature of the first object descriptor or a combination of the different techniques. In yet other embodiments, a preconfigured action may be initiated or performed. In some embodiments, actions may also be performed if an object descriptor generated for an object determined from the media content does not match an object descriptor decoded from the machine readable identifier.

Various different types of actions may be initiated or performed. Examples of actions include annotating the media content, performing an action using the media content, updating a database, sending a message, invoking a URL, or other like actions. Metadata information, if any, associated with the matching object descriptor in information 116 decoded from machine readable identifier 114 may be used as part of the action.

For example, annotating the media content may comprise identifying the spatial location of an object in an image corresponding to a matching object descriptor and adding that information to the header of the image (e.g., may be added to the JPEG header for the image). In this manner various different actions may be initiated.

In the embodiment depicted in Fig. 1A, system 100 is a standalone system that is configured to perform the processing described above. As described above, system 100 may be configured to receive a machine readable identifier, decode object descriptors from the machine readable identifier, determine one or more objects from digital media content, generate object descriptors for the objects, perform a comparison between object descriptors decoded from the machine readable identifier and object descriptors generated for objects determined from the media content to find any matching object descriptors, and then perform one or more actions for each matching object descriptor. System 100 may be embodied in various forms such as a cellular phone possibly equipped with a camera, a personal data assistant (PDA), a camera, a copier, a scanner, a desktop, a laptop, a multifunction device, or any data processing system that is capable of processing digital information.

In alternative embodiments, the various processing described above may be performed by system 100 in association with one or more other data processing systems. Fig. 1B depicts a simplified block diagram of an embodiment of the present invention wherein the processing is performed by system 100 in association with another data processing system. In the distributed embodiment depicted in Fig. 1B, the processing may be performed in association with a server 130. In this embodiment, system 100 may comprise a network interface subsystem 132 that provides an interface to other computer systems, networks, and devices. Network interface subsystem 132 serves as an interface for receiving data communicated to system 100 and for transmitting data to other systems or networks from system 100 over a network such as the Internet or some other communication network. As shown in Fig. 1B, system 100 may communicate with server 130 via communication link 134. Communication link 134 may be a wireless or wired communication link, a combination thereof, or any other link capable of enabling communication. Different communication protocols may be used to facilitate communication between system 100 and server 130.

For the embodiment depicted in Fig. 1B, the various processing described with respect to Fig. 1A may be performed by system 100 in conjunction with server 130. For example, according to an embodiment of the present invention, system 100 may be configured to read the machine readable identifier and capture digital media content and then communicate the information to server 130 over a network. Server 130 may be configured to perform further processing of the captured machine readable identifier information and analysis of the media content including decoding of the machine readable identifier, analyzing the media content to determine one or more objects from the media content, generating object descriptors for the determined objects, and performing a comparison between the object descriptors generated for objects determined from the media content and object descriptors decoded from a machine readable identifier to identify matching object descriptors, if any. Server 130 may also be configured to initiate actions, if any, upon determining matching object descriptors. The action may be performed by server 130, by system 100, or by some other system. In one embodiment, server 130 may send a signal to system 100 to perform the action.

In another embodiment, the processing of machine readable identifiers, processing of media content, and comparison of object descriptors may be performed by system 100 while the action may be performed by server 130. In yet other embodiments, the actions to be performed may be determined by the server and the information provided to system 100. Various other combinations of the processing steps may be performed in alternative embodiments. Various other data processing systems in addition to system 100 and server 130 may be involved in the processing in other embodiments. In one embodiment, the machine readable identifier information and the digital media content may be received via a network connection via wired or wireless links.

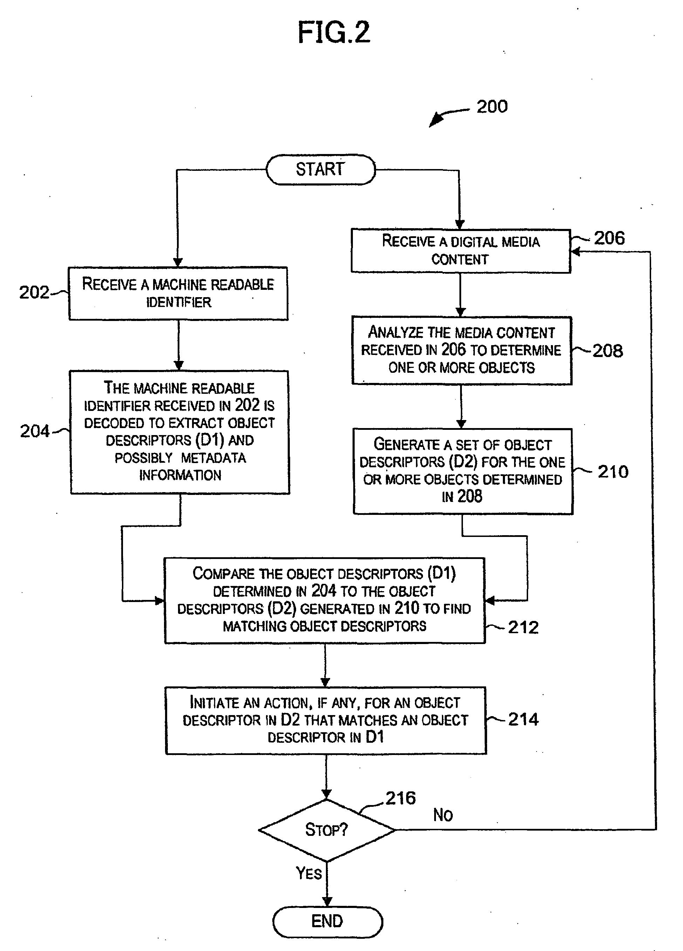

Fig. 2 is a simplified high-level flowchart 200 depicting processing performed according to an embodiment of the present invention. The processing depicted in Fig. 2 may be performed independently by system 100 (e.g., the embodiment depicted in Fig. 1A) or may be performed by system 100 in association with other systems such as server 130 depicted in Fig. 1B. The processing may be performed by software (code modules or instructions) executed by a processor, hardware modules, or combinations thereof. Flowchart 200 depicted in Fig. 2 is merely illustrative of an embodiment of the present invention and is not intended to limit the scope of the present invention. Other variations, modifications, and alternatives are also within the scope of the present invention. The processing depicted in Fig. 2 may be adapted to work with different implementation constraints.

As depicted in Fig. 2, a machine readable identifier is received by a data processing system such as system 100 depicted in Fig. 1A. (step 202). As previously described, the machine readable identifier may be received in various ways. The machine readable identifier may be provided by a user or system, accessed from a memory store, or captured using a capture device. A machine readable identifier may be embodied in various forms such as a barcode, information stored in an RFID tag, etc. Accordingly, the manner in which the machine readable identifier is received in 202 may depend on the type of machine readable identifier and the apparatus available for capturing the machine readable identifier.

The machine readable identifier received in 202 is decoded to extract object descriptors (D1) and possibly metadata information (step 204). Each decoded object descriptor may identify an object by specifying one or more features (or characteristics) of the object. The metadata information, if any, decoded from the machine readable identifier may be associated with one or more of the decoded object descriptors. The system is then ready for analyzing digital media content.

As shown in Fig. 2, digital media content may be received as input (step 206). The digital media content may be received from different sources. For example, in one embodiment, the digital media content may be captured using capture device such as a camera, a copier, a scanner, a microphone, a video camera, etc. The media content may also be provided by a user or some data processing system. The media content may comprise information of one or more types such as text information, image information, audio information, video information, and combinations thereof.

One or more objects are then determined from the media content received in 206 (step 208). As previously described, various different type of objects may be determined from the media content. Various criteria may control the type of objects to be determined including based upon information provided by a user, from the type of media content, from the context of use, and/or from the information decoded in 204.

A set of object descriptors (D2) are then generated for the one or more objects determined from the digital media content in 208 (step 210). As part of the processing in step 210, features may be extracted from each object determined in 208. An object descriptor may then be generated for an object based upon the features extracted from the object. As previously described, the features to be extracted from an object may depend upon the type of the object. Further, the features to be extracted from the objects may be guided by the features described by the object descriptors decoded from a machine readable identifier in step 204. The features that are extracted for an object may be limited to the features identified by the object descriptors (D1) determined from the machine readable identifier. The object descriptors (D1) thus reduce the features that have to be extracted from the media content. This simplifies the feature extraction process thereby reducing the memory and computational resources required for the feature extraction. Reduction of the features search space may also increase the accuracy of the feature extraction process.

The object descriptors (D1) determined in 204 are then compared to the object descriptors (D2) generated in 210 to find any matching object descriptors (step 212). Different techniques may be used to compare the two sets of object descriptors to find matching object descriptors. As previously described, according to one technique, for each object descriptor in D2, a distance metric is calculated for that object descriptor and each object descriptor in D1, where the distance metric between two object descriptors provides a measure of the similarity or matching between the two object descriptors. The distance metric calculated for the pair may then be compared to a preset threshold to determine if the two object descriptors are to be considered as matching. Accordingly, two object descriptors may be considered as matching even though they are not exactly similar. A user may control the desired amount of similarity required for a match by setting the threshold to an appropriate value.

One or more actions, if any, may then be initiated or performed for an object descriptor in D2 that matches an object descriptor in D1 (step 214). Various techniques may be used to determine whether or not an action(s) is to be initiated for a matching object descriptor in D2. Various different types of actions may be initiated. In one embodiment, for a matching object descriptor in D2, the action to be initiated is specified by metadata associated with the matching object descriptor in D1. The action to be performed may be inherent or automatically determined from the contents of the metadata information associated with matching object descriptor in D1. The action to be initiated may also be determined from the nature of the matching object descriptors or a combination of the different techniques. In yet other embodiments, a preconfigured action may be initiated or performed.

Various different types of actions may be initiated and performed. Various types of information may be used in the performance of the action. For example, metadata information associated with the matching object descriptor in D1 may be used for performing the action. In other embodiment, the media content received in 206 or portions thereof may be used in performing the action. Information related to the object whose object descriptor matches an object descriptor in D1 may also be used for performing the action. For example, spatial information related to the object may be used in performing the action.

After the action has been initiated or performed, a check may be made to determine whether or not to stop processing (step 216). If further processing is to be performed then the flowchart processing continues with step 206 wherein new media content is received for analysis. Else, the processing is terminated.

As described above, a single machine readable identifier may be used to encode information for a collection of objects. The machine readable identifier may encode information identifying one or more object descriptors, each object descriptor identifying an object by identifying features or characteristics of the object. The machine readable identifier may also encode information identifying actions upon finding a matching object descriptor. Per the processing described above, objects determined from the media content are identified whose object descriptors match the object descriptors extracted from the machine readable identifier. Accordingly, objects from the media content are identified whose features match the features specified by the object descriptors decoded from the machine readable identifier. Actions may be performed for matching object descriptors. In this manner, actions may be performed for one or more objects determined from the media content without having to associate the machine readable identifier with the media content.

Since the object descriptors are encoded in the machine readable identifier itself, in one embodiment, the entire processing can be performed by the system by reading the machine readable identifier without requiring access to a server or some other system. For example, as depicted in Fig. 1A, the entire processing may be performed by system 100 which may be a cellular phone, a PDA, a camera, etc. without the help of another system. In alternative embodiments, the processing may be performed by system 100 in association with some other system(s) such as a server, as shown in the embodiment depicted in Fig. 1B.

Further, the object descriptors and other information decoded from a machine readable identifier is used to guide the analysis of the media content. As a result, only specific objects and associated features need to be determined from the media content. This simplifies the process of analyzing the media content to recognize objects from the media content, especially where the media content may have several non-relevant objects. As a result of the simplification, the object determination may be performed using reduced processing and memory resources. Additionally, feature extraction is performed for only those objects that are determined from the media content. Further, only those features specified by object descriptors decoded from the machine readable identifier may be extracted. This simplifies the feature extraction process thereby reducing the memory and computational resources required for the feature extraction. Reduction of the features search space may also increase the accuracy of the feature extraction process. As a result, it may be feasible to run the feature extraction and object determination processes on a low power device such as a cellular phone.

All the objects identified by the object descriptors decoded from the machine readable identifier need not be present in the media content that is analyzed. The media content that is analyzed may comprise none of the objects described by object descriptors decoded from a machine readable identifier, a subset of the objects, or additional objects.

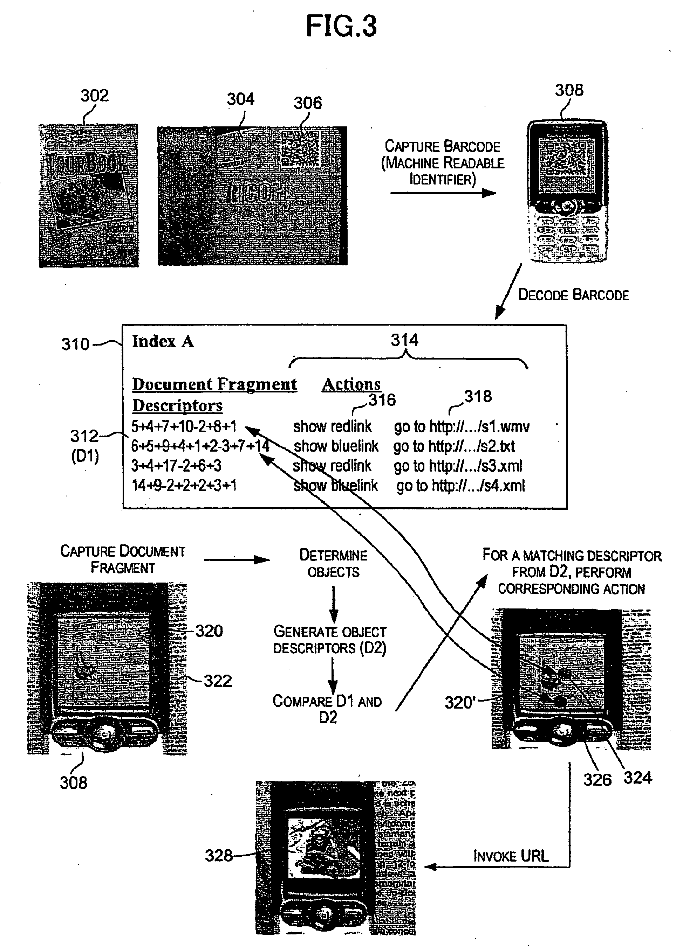

Various different applications may be based upon the teachings of the present invention. One such application is depicted in Fig. 3 according to an embodiment of the present invention. In this application, "hot zones" are automatically identified within a document and associated with URLs. A physical document 302 may comprise a page 304 on which is printed a machine readable identifier 306. Document 302 may be any document such as a tour book depicted in Fig. 3. Machine readable identifier 306 depicted in Fig. 3 is in the form of a barcode.

Various different forms of barcodes may be used such as QRCodes + MPEG-7 barcodes. In one embodiment, the capacity of a QRCode is approximately 3000 bytes and is sufficient for representation of object descriptors describing features based upon color histograms, color layouts, shape descriptors (Angular Radial Transform (ART) based, Curvature Scale Space (CSS) based), texture descriptors (Gabor, etc.), Mixed Document Reality (MDR) descriptors (e.g., OCR based, image based), etc. MPEG-7 provides a standard and compressed representation for object descriptors. Applicable standards include ISO/IEC 15938-3, MPEG-7: Visual, 2002, ISO/IEC 15938-4, MPEG-7: Audio, 2002, and ISO/IEC 15938-8, MPEG-7: Extraction and Use of MPEG-7 Description, 2002. In one implementation, approximately 100 bytes may be used for each document fragment descriptor, and as a result up to 300 document fragment descriptors may be described in a document with one machine readable identifier. Machine readable identifier 306 may take different forms in alternative embodiments such as information stored on an RFID tag.

A user may use a device equipped with an appropriate reader to read machine readable identifier 306. For example, as depicted in Fig. 3, a user may use a mobile phone 308 that is equipped with a barcode reader to read and capture barcode 306. In embodiments where the machine readable identifier information is stored on an RFID tag, the reader may user a device equipped with a RFID tag reader to read the machine readable identifier information from the tag.

The machine readable identifier read by phone 308 may then be decoded to extract decoded information 310. Information 310 may comprise information identifying a set of object descriptors 312 (D1). In Fig. 3, the object descriptors specify document fragments, accordingly the object descriptors may also be referred to as document fragment descriptors. Each document fragment descriptor 312 describes a document fragment that is a "hot zone". The object descriptor for each hot zone describes the hot zone based upon features or characteristics associated with the hot zone. In the example depicted in Fig. 3, each object descriptor is a string of word lengths characterizing the hot zone document fragment. Here, the numbers indicate the number of letters in each word. '+' represents the space between two words, and '-' represents a new line. For example, the first object descriptor is "5+4+7+10-2+8+1" identifies an object characterized by a 5 letter word, followed by a space, followed by a 4 letter word, followed by a space, followed by a 7 letter word, followed by a space, followed by a 10 letter word, followed by a new line, followed by a 2 letter word, followed by a space, followed by a 8 letter word, followed by a space, and followed by a 1 letter word. The object descriptor provides a signature for an object. It should be noted that in the embodiment depicted in Fig. 3, the object descriptors do not describe the hot zones based upon locations or positions of the hot zones within a document but rather based upon features or contents of the hot zones. As a result, the application of the object descriptors is not limited to a specific location within a document to be analyzed. Thus, a document fragment identified by an object descriptor can be recognized even if only a part of the document to be analyzed is provided, the whole document need not be provided. The application is also not limited to a specific document or specific media content.

Decoded information 310 may also comprise metadata information 314 associated with object descriptors 312. In the embodiment depicted in Fig. 3, the metadata 314 for each document fragment descriptor 312 identifies an action 316 to be performed when a matching object descriptor is identified, or in other words when an object whose features match the features specified by an object descriptor 312 is identified. In Fig. 3, metadata 314 for each object descriptor 312 also comprises information 318 identifying a URL to be used for performing the action.

While paging through book 302, a user may use camera phone 308 (or some other device) to capture a digital image 320 of a portion of a page 322 in book 302. Digital image 320 corresponds to a document fragment and represents the media content to be searched for objects that match the features specified by object descriptor 312. Image 320 may then be processed to determine objects. In this example, since object descriptors D1 identify document fragments, only document fragments may be determined from image 320. Features may then be extracted from the document fragments. The feature extraction may be limited to word lengths, spaces, and new lines as specified by the object descriptors.

Object descriptors (D2) may then be generated for the objects recognized from image 320. The object descriptors (D2) generated for the objects recognized from image 320 are then compared to object descriptors (D1) decoded from machine readable identifier 306 to find matching object descriptors.

An action is then performed for an object descriptor in D2 that matches an object descriptor in D1. The action that is performed is identified by the metadata associated with the matching object descriptor in D1.

In the example depicted in Fig. 3, two object descriptors from D2 are found to match the first and the second object descriptors in D1, i.e., two hot zones are identified in image 320, one matching object descriptor "5+4+7+10-2+8+1" and the other matching object descriptor "6+5+9+4+1+2-3+7+14". In the example depicted in Fig. 3, the action to be performed for a matching object descriptor is explicitly specified by the metadata associated with the matching object descriptor in D1 that is extracted from machine readable identifier 306. Accordingly, actions specified by the metadata associated with the two matching object descriptors in D1 are then performed. In the example depicted in Fig. 3, a red link or marker 324, as identified by the metadata associated with first object descriptor in D1, is overlaid on or near the hot zone whose object descriptor matched the first object descriptor in D1 and a blue link or marker 326, as identified by the metadata for second object descriptor is overlaid on or near the hot zone whose object descriptor matched the second object descriptor in D1.

As part of the action, URLs may be associated with the markers. For a particular identified hot zone, the marker overlaid on the hot zone may be associated with a URL specified by the metadata for the corresponding matching object descriptor from D1. One or more of the URLs may also be invoked and displayed. For example, a document 328 corresponding to a URL associated with marker 324 may be invoked and displayed by device 308 (or by some other device or system). In other embodiments, the URL corresponding to a marker may be invoked when a user selects the marker from annotated image 320'.

As the use of RFID tags becomes more prevalent, more and more products will come with RFID tags attached to them. People may also carry RFID tags that store personal identification information. For example, a person may carry an RFID tag that stores biometric information about a person. For example, an RFID tag associated with a person may store one or more object descriptors describing features of the person such as information describing the visual appearance of the person's face. Since the object descriptors describe face features they may also be referred to as face descriptors. A descriptor may also describe other features of a person such as biometric information for the person.

An RFID tag may also store metadata for the person. The metadata may be associated with one or more face descriptors stored in the RFID tag. For example, for a person, the metadata may identify the name of the person. The metadata associated with a face descriptor may also store other types of information such as the address of the person, health information for the person, telephone number, and other information related to the person. Other information may also be stored by the RFID tag. Several people may carry such RFID tags, each potentially storing a facial descriptor for the corresponding person and possibly associated metadata information.

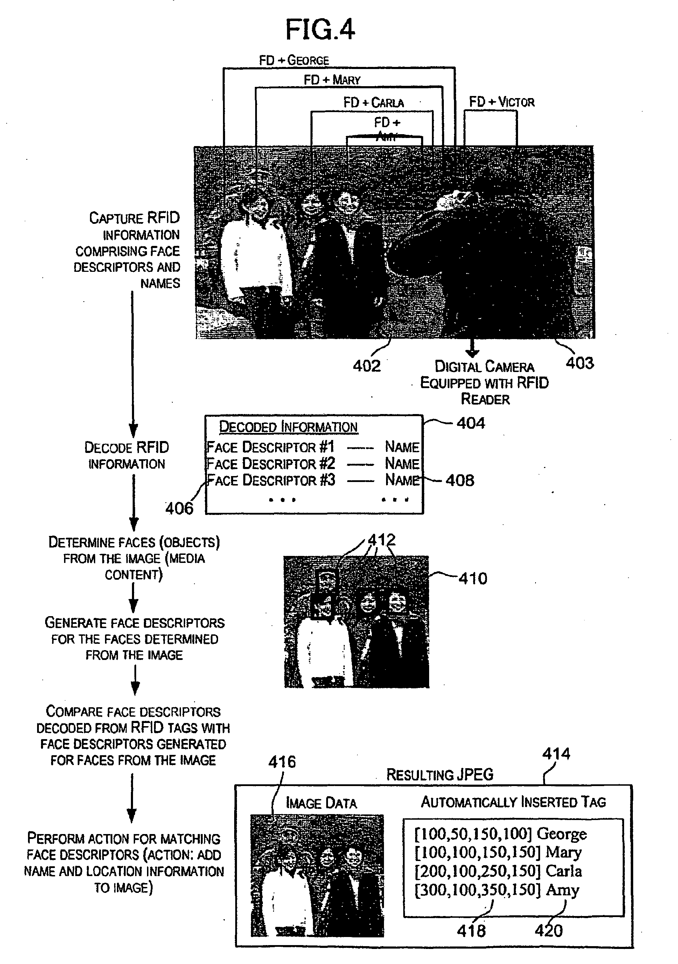

Fig. 4 depicts another application according to an embodiment of the present invention. In this example application, teachings of the present invention are used to analyze and automatically annotate a digital image. This example makes use of RFID tags that people may carry with them and may store information related to the person. As shown in scene 402 depicted in Fig. 4, a person 403 (named Victor) may use a digital camera to capture a photo of a group of people (with names George, Mary, Carla, and Amy as depicted in Fig. 4). The camera used by Victor 403 may be equipped with a long-range RFID reader that is capable of reading RFID information (i.e., machine readable identifier information) from RFID tags carried by people within a certain distance. Accordingly, when Victor uses the camera to capture a photo of the group, the camera may be configured to read RFID information from tags that are within communication range of the RFID reader on the camera. For example, the camera may read RFID information from tags carried or associated with people in proximity to the camera. For example, in scene 402 depicted in Fig. 4, the camera may read RFID information from tags of people (George, Mary, Carla, Amy) whose photo is being captured. The camera may also read information from RFIDs associated with other people that are within reading range of the camera RFID reader including information from the RFID tag of the person (e.g., Victor) taking the picture. An RFID tag for a person may store one or more object descriptors describing features of the person. For the example depicted in Fig. 4, it is assumed that the RFID tag for a person stores a face descriptor for the person and the associated metadata information specifies the person's name. The face descriptor may specify features of the person's face.

In alternative embodiments, other types of object descriptors describing features of a person may be stored in an RFID tag for a person. These object descriptors may then be used to identify persons from the media content.

The RFID information read by the camera from the RFID tags may then be decoded by the camera to form decoded information 404. Decoded information 404 may comprise a list of face descriptors 406 and associated metadata information 408 specifying names of the persons.

Photo image 410 captured by the digital camera serves as the media content that is analyzed. In one embodiment, the analysis of the captured photo image may be performed by the camera. The camera may determine a set of objects from the captured image. The objects in this application are faces 412 of people occurring in the captured image. For each face 412 determined from image 410, the spatial location of the face in the photograph may also be determined. In alternative embodiments, the spatial information for a face in the photograph may be determined at the time of performing an action for the face. Features may be extracted for the faces. The camera may then generate a face descriptor (object descriptor) for each face (object) determined from image 410.

The camera may then compare the face descriptors generated for the one or more faces determined from image 410 to face descriptors 406 decoded from information read from the RFID tags to find any matching object descriptors. As previously described, various different techniques may be used to perform the comparison and to determine whether two object descriptors are matching.

If a face descriptor for a face determined from image 410 is found to match a face descriptor 406 decoded from the RFID tags, it implies that a face in photo image 410 satisfies or matches the features specified by a face descriptor decoded or read from the RFID tags. Thus, a match indicates that a face described by a face descriptor decoded from information read from the RFID tags is found in the faces (objects) determined from the photo image.

An action may then be initiated or performed for each matching face descriptor generated for a face determined from image 410. In the example depicted in Fig. 4, for a matching face descriptor generated for a face determined from the image, information may be may be annotated to image 410. For example, as depicted in Fig. 4, four faces are determined from image 410 and the face descriptors generated for the faces match the face descriptors 406 decoded from information read from the RFID tags. For each face in the image whose face descriptor is found to be matching, a tag is automatically added to the image 410. In the example depicted in Fig. 4, the tag information added for a face comprises information 418 indicating the spatial coordinates of the face within image 410 and the name 420 of the person corresponding to the face. The name of the person is determined from metadata 408 associated with the matching object descriptor 406 decoded from information read from the RFID tags. As depicted in Fig. 4, tags for the four faces determined from image 410 have been added to the image.

The information may be added to the image in various ways. For example, a JPEG image 414 comprises image data 416 and also header information related to the image. The tag information for a face, including spatial coordinates information and the name, may be inserted in the header for the JPEG image. In another embodiment, image 410 may be annotated by adding information to the image data. For example, the name may be printed on top (or proximal to or partially overlapping) of the face corresponding to the name.

Other actions may also be performed. For example, for a particular face located in the image, the action performed may comprise associating a link with the face in the image, wherein selection of the link invokes information (e.g., a web page of the person, a document authored/edited/viewed by the person, etc.) related to the person.

According to an embodiment of the present invention, the processing depicted in Fig. 4 may be performed entirely by the digital camera that is used to capture the photo. In alternative embodiments, the processing may be performed by the camera in association with other systems or devices. Embodiments of the present invention thus enable applications involving automatic annotation of photos that combines use of RFID tags and object recognition. The object descriptors encoded in a machine readable identifier are used to determine the existence and/or location of an object in an image.

In the example depicted in Fig. 4 and described above, the objects correspond to faces. However, in alternative embodiments, the object descriptors decoded from a machine readable identifier may describe other parts of a person (which may include the whole person). Analysis of the image may include recognizing one or more persons in the image and recognizing one or more parts of a person and then generating descriptors for the recognized parts which are then used for the comparison.

As another example, a camera equipped with an RFID reader may be used to take capture an image of books placed on a bookshelf in a library Each book may be tagged with an RFID tags. A tag associated with a book may store the card catalog number that is printed on the spine of the book. The image may then be analyzed to identify card catalog numbers from the image. The spatial locations of books within the image may also be determined. The image may then be annotated with the card catalog numbers such that card numbers are assigned to individual books in the image.

Similar processing techniques may also be used for applications comprising a collection of things such as books, products, etc. For example, a camera equipped with an RFID reader may be used to capture an image of products on a shelf in a store. For example, the image may depict different brands of toothpastes. An RFID tag may be associated with each toothpaste and may store information specifying a toothpaste descriptor describing features of the toothpaste such as color histograms of the package, etc. Each RFID tag attached to a toothpaste may also store metadata information specifying a brand of the toothpaste (or other information such as product identification information). Based upon the information read from the RFID tags attached to the toothpastes, the image of the toothpastes may be analyzed to determine locations of individual toothpastes in the image. The image may then be annotated with correct brand names for the toothpastes at various locations in the image.

As previously described, teachings of the present invention may be used to determine occurrences of particular objects (described by information decoded from one or more machine readable identifiers) in media content and also to determine spatial locations of the particular objects. For example, an image may be captured of physical objects, and the image may then be analyzed, guided by information read from machine readable identifiers read for the physical objects, to determine the spatial locations of the physical objects within the image which in turn identifies to the spatial locations of the physical objects. Embodiments of the present invention may thus be used to determine spatial locations of physical objects.

Various different applications may require determination of spatial locations of physical objects. One solution for determining the spatial locations of physical objects is to attach RFID tags to the physical objects. A RFID reader grid may then be used to read information from the RFID tags and to determine the locations of the physical objects. A RFID reader grid however may not always be available. Further, the costs of creating such a grid may be prohibitive.

Embodiments of the present invention provide a simpler solution to the problem of determining the location of the physical objects. An RFID tag may be attached to each physical object. The RFID tag attached to a physical object may store information specifying an object descriptor. The object descriptor may describe features of the physical object. For example, an object descriptor may specify visually distinctive features of the physical object such as pictures, text, etc. printed on the token, color of the object, dimensions or basic shape of the object, a color histogram for the object, text features, etc.. A camera equipped with an RFID reader may be used to capture an image of the physical objects. While capturing the image, the camera may also be configured to read information from RFID tags attached to the physical objects. The information read from the RFID tags may be decoded to determine object descriptors (and possibly metadata information) specifying features of the physical objects. Based upon the information objects descriptors, the image of the physical objects may be analyzed to determine one or more objects in the image and spatial locations of the objects determined from the image. Objects descriptors may be generated for the objects determined from the image. The objects descriptors generated for objects determined from the image may then be compared to objects descriptors decoded from information read from the RFID tags to identify matching object descriptors and associated spatial information. In this manner, the spatial positions of the physical objects may be determined from analyzing the image based upon information read from the RFID tags attached to the physical objects.

An example of an application where spatial locations of physical objects is determined is described in U.S. Application No. 11/396,375 filed March 31, 2006. In this applications, various actions are performed based upon spatial positions of media keys. Embodiments of the present invention may be used to determine the physical locations of the media keys.

The embodiments of the present invention described above assume that the object descriptors and the corresponding metadata information are decoded or extracted from one or more machine readable identifiers. In alternative embodiments, the object descriptors and the metadata may also be provided to the processing system, in which cases the processing system does not have to process machine readable identifiers. Rest of the processing may be performed as described above. For example, in the example depicted in Fig. 4, the face descriptors 406 and the metadata information 408 may be provided to the camera. In this case the camera need not have a RFID reader and the people need not carry RFID tags. The information provided to the camera may then be used as previously described.

Although specific embodiments of the invention have been described, various modifications, alterations, alternative constructions, and equivalents are also encompassed within the scope of the invention. The described invention is not restricted to operation within certain specific data processing environments, but is free to operate within a plurality of data processing environments.

Further, while the present invention has been described using a particular combination of hardware and software, it should be recognized that other combinations of hardware and software are also within the scope of the present invention. The present invention may be implemented only in hardware, or only in software, or using combinations thereof.

The specification and drawings are, accordingly, to be regarded in an illustrative rather than a restrictive sense.

## Claims

1. A method performed by a data processing system of processing digital media content for automatically comparing one or more objects determined from digital media content to one or more objects specified by a machine readable identifier to determine if an object determined from the digital media content matches an object specified by the machine readable identifier, the digital media content being an image, audio information, video information or a document, the method being **characterized by**:
- determining a first object descriptor from the machine readable identifier, the first object descriptor specifying one or more features of an object;
- determining a set of one or more objects from the digital media content, the determination comprising analysing the digital media content for the one or more features specified by the first object identifier;
generating an object descriptor for each object in the set of objects;
- wherein generating an object descriptor for each object in the set of objects includes:
- for each object in the set of objects:
- extracting one of more features for the object from the digital media content, the one or more features to be extracted being determined based upon the one or more features specified by the first object descriptor determined from the machine readable identifier, being dependent upon the type of the object, and being limited to the features identified by the first object descriptor determined from the machine readable identifier; and
- generating an object descriptor for the object based upon the extracted one or more features;
- identifying at least one object descriptor from the object descriptors determined for the set of objects that matches the first object descriptor determined from the machine readable identifier.

2. The method of claim 1 further including:
performing an action in response to identifying the at least one object descriptor as matching the first object descriptor.

3. The method of claim 2 further including:
determining, from the machine readable
identifier, metadata information associated with the first object descriptor; and
determining the action to be performed based upon the metadata Information.

4. The method of claim 2 further including determining, from the machine readable identifier, an identifier associated with the first object descriptor, wherein:
the first object descriptor determined from the machine readable identifier specifies features of a person;
determining the set of objects includes determining one or more persons from the digital media content;
performing the action includes
adding, to the digital media content, information indicative of a spatial location of a person corresponding to the at least one object descriptor in the digital media content, and
adding the identifier associated with the first object descriptor to the digital media content.

5. The method of claim 1 wherein the machine readable identifier is a barcode and wherein determining the first object descriptor from the machine readable includes:
reading the barcode using a barcode reader; and
determining the first object descriptor from the barcode.

6. The method of claim 1 wherein the machine readable identifier is stored an a radio frequency identifier (RFID) tag and wherein determining the first object descriptor from the machine readable includes:
reading information from the RFID tag using an RFID reader; and
determining the first object descriptor from the information read from the RFID tag.

7. The method of claim 1 wherein determining the set of objects from the digital media content includes analyzing the digital media content for the one or more features specified by the first object descriptor.

8. A data processing system for automatically comparing one or more objects determined from digital media content to one or more objects specified by a machine readable identifier, the system comprising:
a reader adapted to read a machine readable identifier; and
a processor adapted to perform the method of one of the preceding claims.

## Patentansprüche

1. Ein Verfahren zum Verarbeiten digitaler Medieninhalte zum automatischen Vergleichen eines oder mehrerer aus den digitalen Medieninhalten bestimmten Objekts bzw. Objekte, die durch einen maschinenlesbaren Identifier bezeichnet wird, wobei das Verfahren durch ein Datenverarbeitungssystem durchgeführt wird und dazu dient zu bestimmen, ob ein aus den digitalen Medieninhalten bestimmtes Objekt zu einem durch den maschinenlesbaren Identifier bezeichneten Objekt passt, wobei die digitalen Medieninhalte ein Bild, Audioinformationen, Videoinformationen oder ein Dokument sind, wobei das Verfahren **gekennzeichnet ist durch**:
- Bestimmen eines ersten Objektsdeskriptors aus dem maschinenlesbaren Identifier, wobei der erste Objektdeskriptor ein Merkmal oder mehrere Merkmale eines Objekts beschreibt;
- Bestimmen eines Satzes aus einem oder mehreren Objekten aus den digitalen Medieninhalten, wobei das Bestimmen ein Analysieren der digitalen Medieninhalte in Bezug auf das eine Merkmal oder die mehreren Merkmale, das bzw. die von dem ersten Objektidentifier beschrieben wird bzw. werden, enthält;
Erzeugen eines Objektdeskriptors für jedes Objekt in dem Satz Objekte;
- wobei das Erzeugen eines Objektdeskriptors für jedes Objekt in dem Satz Objekte enthält:
- für jedes Objekt in dem Satz Objekte:
- Extrahieren eines Merkmals oder mehrerer Merkmale für das Objekt aus den digitalen Medieninhalten, wobei das eine zu extrahierende Merkmal oder die mehreren zu extrahierenden Merkmale basierend auf dem einen Merkmal oder den mehreren Merkmalen, das bzw. die von dem aus dem maschinenlesbaren Identifier ersten Objektdeskriptor bestimmt wird bzw. werden, bestimmt wird bzw. werden, was abhängig von der Art des Objekts und begrenzt auf die von dem ersten Objektdeskriptor, der aus dem maschinenlesbaren Identifier bestimmt wird, durchgerührt wird; und
- Erzeugen eines Objektdeskriptors für das Objekt basierend auf dem einen Merkmal oder den mehreren Merkmalen, das bzw. die extrahiert worden ist bzw. sind;
- Identifizieren wenigstens eines Objektdeskriptors aus den für den Satz Objekte bestimmten Objektdeskriptoren, der zu dem ersten Objektdeskriptor, der aus dem maschinenlesbaren Identifier bestimmt worden ist, passt.

2. Verfahren gemäß Anspruch 1, ferner enthaltend:
Durchführen einer Aktion bzw. Handlung in Erwiderung auf das Identifizieren,
dass der wenigstens eine Objektdeskriptor zu dem ersten Objektdeskriptor passt.

3. Verfahren gemäß Anspruch 2, ferner enthaltend:
Bestimmen von dem ersten Objektdeskriptor zugeordneten Metadateninformationen aus dem maschinenlesbaren Identifier; und
Bestimmen der durchzuführenden Aktion basierend auf den Metadateninformationen.

4. Verfahren gemäß Anspruch 2, ferner enthaltend ein Bestimmen eines dem ersten Objektdeskriptor zugeordneten Identifiers aus dem maschinenlesbaren Identifier, wobei:
der erste Objektdeskriptor, der aus dem maschinenlesbaren Identifier bestimmt worden ist, die Merkmale einer Person beschreibt;
Bestimmen des Satzes von Objekten ein Bestimmen einer Person oder mehrerer Personen aus den digitalen Medieninhalten enthält;
das Durchführen der Aktion enthält
Hinzufügen zu den digitalen Medieninhalten von Informationen, die einen räumlichen Ort einer dem wenigstens einen Objektdeskriptor in den digitalen Medieninhalten entsprechenden Person anzeigen, und
Hinzufügen des dem ersten Objektdeskriptor zugeordneten Identifiers zu den digitalen Medieninhalten.

5. Verfahren gemäß Anspruch 1, bei dem der maschinenlesbare Identifier ein Barcode ist und bei dem das Bestimmen des ersten Objektdeskriptors aus dem maschinenlesbaren Identifier enthält:
Lesen des Barcodes durch Verwendung eines Barcodelesers; und
Bestimmen des ersten Objektdeskriptors aus dem Barcode.

6. Verfahren gemäß Anspruch 1, bei dem der maschinenlesbare Identifier in einem Radiofrequenzidentifikations(RFID)-Anhänger gespeichert ist und bei dem das Bestimmen des ersten Objektdeskriptors aus dem maschinenlesbaren enthält:
Lesen von Informationen von dem RFID-Anhänger durch Verwendung eines RFID-Lesers; und
Bestimmen des ersten Objektdeskriptors aus den von dem RFID-Anhänger gelesenen Informationen.

7. Verfahren gemäß Anspruch 1, bei dem das Bestimmen des Satzes von Objekten aus den digitalen Medieninhalten ein Analysieren der digitalen Medieninhalte auf ein Merkmal oder mehrere Merkmale, das bzw. die von dem ersten Objektdeskriptor beschrieben wird bzw. werden, enthält.

8. Datenverarbeitungssystem zum automatischen Vergleichen eines Objekts oder mehrerer Objekte, das bzw. die aus digitalen Medieninhalten bestimmt wurde bzw. wurden, mit einem Objekt oder mehreren Objekten, das bzw. die von einem maschinenlesbaren Identifier beschrieben wird bzw. werden, wobei das System enthält:
einen zum Lesen eines maschinenlesbaren Identifiers angepassten Leser; und
einen zum Durchführen des Verfahrens gemäß einem der vorhergehenden Ansprüche angepassten Prozessor.

## Revendications

1. Procédé exécuté par un système de traitement de données pour traiter le contenu d'un support numérique pour comparer automatiquement un ou plusieurs objets déterminés à partir du contenu du support numérique à un ou plusieurs objets spécifiés par un identifiant lisible par une machine pour déterminer si un objet déterminé à partir du contenu du support numérique correspond à un objet spécifié par l'identifiant lisible par une machine, le contenu du support numérique étant une image, des informations audio, des informations vidéo ou un document, le procédé étant **caractérisé par** :
la détermination d'un premier descripteur d'objet à partir de l'identifiant lisible par une machine, le premier descripteur d'objet spécifiant une ou plusieurs caractéristiques d'un objet ;
la détermination d'un ensemble d'un ou plusieurs objets à partir du contenu du support numérique, la détermination comprenant l'analyse du contenu du support numérique pour la ou les caractéristiques spécifiées par le premier identifiant d'objet ;
la génération d'un descripteur d'objet pour chaque objet de l'ensemble d'objets ;
dans lequel la génération d'un descripteur d'objet pour chaque objet de l'ensemble d'objets comporte :
pour chaque objet de l'ensemble d'objets :
l'extraction d'une ou plusieurs caractéristiques de l'objet à partir du contenu du support numérique, la ou les caractéristiques destinées à être extraites étant déterminées en se basant sur la ou les caractéristiques spécifiées par le premier descripteur d'objet déterminé à partir de l'identifiant lisible par une machine, dépendant du type d'objet et étant limitées aux caractéristiques identifiées par le premier descripteur d'objet déterminé à partir de l'identifiant lisible par une machine ; et
la génération d'un descripteur d'objet pour l'objet en se basant sur la ou les caractéristiques extraites ;
l'identifiant d'au moins un descripteur d'objet à partir des descripteurs d'objet déterminés pour l'ensemble d'objets correspondant au premier descripteur d'objet déterminé à partir de l'identifiant lisible par une machine.

2. Procédé selon la revendication 1, incluant en outre :
l'exécution d'une action en réponse à l'identifiant de l'au moins un descripteur d'objet comme correspondant au premier descripteur d'objet.

3. Procédé selon la revendication 2, incluant en outre :
la détermination, à partir de l'identifiant lisible par une machine, d'information de métadonnées associées au premier descripteur d'objet ; et
la détermination de l'action à exécuter en se basant sur les informations de métadonnées.

4. Procédé selon la revendication 2, incluant en outre la détermination, à partir de l'identifiant lisible par une machine, d'un identifiant associé au premier descripteur d'objet, dans lequel :
le premier descripteur d'objet déterminé à partir de l'identifiant lisible par une machine spécifie les caractéristiques d'une personne ;
la détermination de l'ensemble d'objets comporte la détermination d'une ou plusieurs personnes à partir du contenu du support numérique ;
l'exécution de l'action comporte
l'addition au contenu du support numérique d'informations indiquant l'emplacement spatial d'une personne correspondant à l'au moins un descripteur d'objet dans le contenu du support numérique, et
l'addition au contenu du support numérique de l'identifiant associé au premier descripteur d'objet.

5. Procédé selon la revendication 1, dans lequel l'identifiant lisible par une machine est un code-barres et dans lequel la détermination du premier descripteur d'objet à partir de l'identifiant lisible par une machine comporte :
la lecture du code-barres en utilisant un lecteur de code-barres ; et
la détermination du premier descripteur d'objet à partir du code-barres.

6. Procédé selon la revendication 1, dans lequel l'identifiant lisible par une machine est mémorisé dans une étiquette d'identifiant par radiofréquence (RFID) et dans lequel la détermination du premier descripteur d'objet à partir de l'identifiant lisible par une machine comporte :
la lecture des informations de l'étiquette RFID en utilisant un lecteur de RFID ; et
la détermination du premier descripteur d'objet à partir des informations lues sur l'étiquette RFID.

7. Procédé selon la revendication 1, dans lequel la détermination de l'ensemble d'objets à partir du contenu du support numérique comporte l'analyse du contenu du support numérique pour la ou les caractéristiques spécifiées par le premier descripteur d'objet.

8. Système de traitement de données pour comparer automatiquement un ou plusieurs objets déterminés à partir du contenu d'un support numérique à un ou plusieurs objets spécifiés par un identifiant lisible par une machine, le système comprenant :
un lecteur adapté à lire un identifiant lisible par une machine ; et
un processeur adapté à exécuter le procédé selon l'une des revendications précédentes.
